# EUROPEAN PATENT SPECIFICATION

(11) **EP 3 850 952 B1**
(45) Date of publication and mention of the grant of the patent: **17.12.2025**
(21) Application number: 20464003.1
(22) Date of filing: 12.02.2020
(51) Int. Cl.: A23L 21/10, A23L 21/15

(54) **HAWTHORN FRUITS PASTE WITH REDUCED SUGAR CONTENT AND MANUFACTURE METHOD THEREOF**
WEISSDORNFRUCHTPASTE MIT REDUZIERTEM ZUCKERGEHALT UND VERFAHREN ZU IHRER HERSTELLUNG
PÂTE DE FRUITS D'AUBÉPINE À TENEUR EN SUCRE RÉDUITE ET SON PROCÉDÉ DE FABRICATION

(30) Priority: 17.01.2020 RO 202000018
(43) Date of publication of application: 21.07.2021
(73) Proprietor: Universitatea Stefan cel Mare Suceava - Romania, 720229 Suceava (RO)
(72) Inventor: Ungureanu-Iuga, Madalina, 727203 jud. Suceava (RO); Mironeasa, Silvia, 727242 jud. Suceava (RO)

(56) References cited:
- CN-A- 107 736 470
- CN-B- 102 524 497
- DATABASE GNPD [online] MINTEL; 27 January 2012 (2012-01-27), ANONYMOUS: "Low-Sugar Hawthorn Spread", XP055717740, retrieved from www.gnpd.com Database accession no. 1705999
- DATABASE GNPD [online] MINTEL; 19 August 2008 (2008-08-19), ANONYMOUS: "Mashed Hawthorn Fruit Spread", XP055717745, retrieved from www.gnpd.com Database accession no. 960094
- DATABASE GNPD [online] MINTEL; 28 November 2006 (2006-11-28), ANONYMOUS: "Hawthorn Spread", XP055717746, retrieved from www.gnpd.com Database accession no. 621759
- DATABASE GNPD [online] MINTEL; 3 August 2011 (2011-08-03), ANONYMOUS: "Hawthorn", XP055717747, retrieved from www.gnpd.com Database accession no. 1607611

## Description

The invention refers to a paste product type obtained from hawthorn fruits and to a manufacture method thereof.

Various food products as paste type from fruit juices are known. Their disadvantages are that they have a high sugar content and exogenous thickening agents added in the manufacturing recipe.

CN102 524 497 B discloses a hawthorn fruit paste product and a preparation method thereof.

CN 107 736 470 A discloses a hawthorn paste formula and a processing method thereof.

The technical problem solved by the invention consists in using inulin, Renet apple variety juice, and hawthorn fruits for the production of food product as paste type from hawthorn fruit with reduced sugar content.

The product according to the invention, presented as paste type from howthorn fruit with reduced sugar content, diversifies the range of desert type products and removes the disadvantages mentioned above in that it do not contain sugar added and its consistency is obtained due to the high pectin content (1...2%) of hawthorn fruits, it is composed of 13,90% carbohydrates, 0,16% lipids, 0,64% proteins, 4,45% fibers and it have an energetic value of 65,65 kcal/100g or 274,67 kJ/100g, has a soluble solid content of 20...25% at the temperature of 20°C, and has a the total acidity expressed as malic acid content of minimum 0,6%.

The manufacturing method of hawthorn fruits paste, according to the invention, includes the following steps: mechanical mincing of hawthorn fruits which were previously conditioned, partial thermal processing in order to obtain hawthorn pulp, boiling for 10...15 min, paste obtaining and its pouring in containers.

**Example.** The manufacture recipe for 100 kg of hawthorn fruits paste is composed of the following ingredients: 40 kg hawthorn fruits pulp, 30 kg inulin and 30 L Renet apple variety juice. Hawthorn fruits, after reception, washing, stems removal and sorting, are subjected to the mechanical mincing process, partial thermal processing in blanching equipments in a ratio of 2 parts fruits and 1 part water, at approximately 70°C, for about 10 minutes in order to prepare a fruit pulp. Fruit pulp is then filtered to result a uniform mass, without impurities, and 40 kg hawthorn fruits pulp mixed with 30 kg inulin and 30 L Renet apple variety juice then it is introduced in a double-layer boiler which is gradually heated with steam until the boiling temperature of about 103°C is reached, maintained for 10...15 min and then cooled and dosed at the temperature of 90°C...95°C.

The obtained product is presented as a consistent paste, opaque, of a pink-reddish uniform color, characteristic for the hawthorn fruits from which the pulp was prepared, with a sweet-sour taste and well expressed pleasant aroma, given by the compounds such as triterpenic glycosides, aldehydes, organic acids from the hawthorn fruits pulp.

The invention implementation leads to the following advantages:
- superior valorization of hawthorn fruits which are accessible raw materials through a simple and easy to make process;
- obtaining a food product as paste type from hawthorn fruits with reduced sugar content, without sugar and thickening agents addition, with an appreciable content of soluble fibers from the hawthorn fruits and apples compositions, which maintain the blood sugar balance and reduce the diabetes occurrence risk;
- obtaining a food product as pasta type from hawthorn fruits rich in bioactive compounds with antioxidant properties due to the use as ingredient of the hawthorn pulp which contains anthocyanins, bioflavonoids, tannins, saponins, sugar, tartaric acid, B1, B2, B3, B5, B6, B9, B12 vitamins, but also due to the apple juice rich in B1, B2, B5, PP and C vitamins;
- obtaining a food product as pasta type from hawthorn fruits with a significant content of minerals, potassium, calcium and phosphorus due to the input of hawthorn fruits and Renet apple variety juice;
- attenuation of hypertension, atherosclerosis, arrhythmia, improvement of blood flow in blood vessels, due to the chemical composition of hawthorn fruits;
- stimulation of the beneficial bacteria from the digestive system through the bifidogenic effect of inulin on the human body;
- diet caloric intake reduction and nutrients absorption diminishing in the small intestine due to the fibers presence, thereby having beneficial effects on the obesity.

The manufacture method of hawthorn fruits paste, according to the invention as defined in the claims 1-2, can be reproduced with the same characteristics and performances whenever necessary.

### REFERENCES

1. Costin G.M., Segal R., 2001. Foods for special nutrition, Academica Publishing House, Galati, Romania.
2. Segal R., 2002. Nutrition principles, Academica Publishing House, Bucharest, Romania.
3. Nitescu, M., Nedelescu, M., 2019. The role of dietary fibers in the prevention of non-transmissible chronic diseases, Journal of School and University Medicine, 6(1), 14-27.

## Claims

1. Food product as paste type from hawthorn fruits with reduced sugar content,
**characterized in that** it is composed of 13,90 % carbohydrates, 0,16% lipids, 0.64% proteins, 4,45% fibres, has an energetic value of 65,65 kcal/100 g or 274,67 kJ/100 g, has a soluble content of 20...25% at the temperature of 20°C, has a the total acidity expressed as malic acid content of minimum 0,6% and it is prepared from 40 kg hawthorn fruits pulp, 30 kg inulin and 30 L Renet apple variety juice.

2. Method for manufacturing the hawthorn fruit paste defined in claim 1 comprising reception, washing, stems removal and sorting of hawthorn fruits, mechanically mincing the hawthorn fruits, partial thermal processing in blanching equipments in a ratio of 2 parts fruits and 1 part water, at approximately 70°C, for about 10 min in order to prepare a fruit pulp and then filtering the fruit pulp, mixing 40 kg hawthorn fruits pulp, 30 kg inulin and 30 L Renet apple variety juice, introducing in a double-layer boiler which is gradually heated with steam until the boiling temperature of about 103°C is reached, maintained for 10...15 min and then cooling and dosing at the temperature of 90°C...95°C.

## Patentansprüche

1. Lebensmittelprodukt in Pastenform aus Weißdornfrüchten mit reduziertem Zuckergehalt, **dadurch gekennzeichnet, dass** es aus 13,90% Kohlenhydraten, 0,16 % Lipiden, 0,64% Proteinen und 4,45% Ballaststoffen besteht, einen Energiewert von 65,65 kcal/100 g oder 274,67 kJ/100 g hat, einen löslichen Gehalt von 20...25 % bei einer Temperatur von 20°C hat, einen Gesamtsäuregehalt, ausgedrückt als Apfelsäuregehalt, von mindestens 0,6% hat und wird aus 40 kg Weißdornfruchtmark, 30 kg Inulin und 30 L Saft der Apfelsorte Renet.

2. Verfahren zur Herstellung der Weißdornfruchtpaste nach Ansprüch 1, umfassend die Annahme, das Waschen, Entfernen der Stiele und das Sortieren der Weißdornfrüchte, das mechanische Zerkleinern der Weißdornfrüchte, die teilweise Wärmebehandlung in einer Blanchieranlage im Verhältnis 2 Teile Früchte und 1 Teil Wasser bei etwa 70°C, für etwa 10 min, um ein Fruchtmark herzustellen und das Fruchtmark anschließend zu filtern, Mischen von 40 kg Weißdornfruchtmark, 30 kg Inulin und 30 L Saft der Apfelsorte Renet, Einbringen in einen Doppelschichtkessel, der allmählich mit Dampf erhitzt wird, bis die Siedetemperatur von etwa 103 °C erreicht ist, 10...15 min lang gehalten wird und dann Abkühlen und Dosieren bei einer Temperatur von 90°C...95°C.

## Revendications

1. Produit alimentaire sous forme de pâte à base de fruits d'aubépine à teneur en sucres réduite, **caractérisé en ce qu'**il est composé de 13,90 % de glucides, 0,16 % de lipides, 0,64 % de protéines, 4,45 % de fibres, a une valeur énergétique de 65,65 kcal/100 g ou 274,67 kJ/100 g, a une teneur en matières solubles de 20...25% à la température de 20°C, a une acidité totale exprimée en acide malique d'au moins 0,6% et il est préparé à partir de 40 kg de pulpe de fruits d'aubépine, 30 kg d'inuline et 30 L de jus de pomme de la variété Renet.

2. Procédé de fabrication de la pâte d'aubépine selon la revendication 1, comprenant la réception, le lavage, l'équeutage et le tri des fruits d'aubépine, le hachage mécanique des fruits d'aubépine, un traitement thermique partiel dans un appareil de blanchiment à raison de 2 parts de fruits pour 1 part d'eau, à environ 70°C, pendant environ 10 min afin de préparer une pulpe de fruits, puis la filtration de cette pulpe, le mélange de 40 kg de pulpe d'aubépine, de 30 kg d'inuline et de 30 L de jus de pomme de la variété Renet, l'introduction dans une chaudière à double couche, chauffé progressivement à la vapeur jusqu'à atteindre une température d'ébullition d'environ 103°C, maintenue pendant 10...15 min, puis le refroidissement et le dosage à une température de 90°C... 95°C.
